# EUROPEAN PATENT APPLICATION

(11) **EP 4 159 556 A1**
(43) Date of publication of application: **05.04.2023**
(21) Application number: 21812052.5
(22) Date of filing: 25.05.2021
(51) Int. Cl.: B60S 5/06, B60L 53/80

(54) **BATTERY SWAPPING STATION AND BATTERY SWAPPING METHOD THEREOF**

(30) Priority: 25.05.2020 CN 202010451580; 25.05.2020 CN 202010453481
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: LAN, Zhibo, Shanghai 201308 (CN); HUANG, Chunhua, Shanghai 201308 (CN)
(74) Representative: Bittner, Bernhard
(86) International application number: PCT/CN2021/095881
(87) International publication number: WO 2021/238938

(57) **Abstract**

Provided are a battery swapping station and a battery swapping method thereof. The battery swapping station comprises at least one parking position (11), a battery compartment (2), a first battery swapping device (3), and a second battery swapping device (4). The battery compartment (2) at least stores a first battery pack for a first electric vehicle and a second battery pack for a second electric vehicle. The first battery pack is mounted on the first electric vehicle by means of a first locking mechanism, and the second battery pack is mounted on the second electric vehicle by means of a second locking mechanism; the first battery swapping device (3) and the second battery swapping device (4) are configured to move back and forth between the parking position (11) and the battery compartment (2) so as to swap a battery pack of the first electric vehicle or the second electric vehicle; the first battery swapping device (3) is used for locking and unlocking the first locking mechanism, and the second battery swapping device (4) is used for locking and unlocking the second locking mechanism. According to the battery swapping station and the battery swapping method thereof, battery packs of various types and different locking types can be swapped, the battery swapping station and the battery swapping method thereof can adapt to battery swapping of various electric vehicles, and the battery swapping station is higher in compatibility and wider in application range.

## Description

The present application claims the priority of Chinese patent applications 2020104515801 and 2020104534817 filed on May 25, 2020. The contents of the Chinese patent application are incorporated herein by reference in their entireties.

### TECHNICAL FIELD

The present disclosure relates to a battery swapping station and a battery swapping method thereof.

### BACKGROUND

With the supply pressure and exhaust pollution caused by traditional fossil energy consumption, the development of traditional fuel vehicles has entered a period of sluggishness. For the favor of green energy prospects, electric vehicles have shown a spurt of development in recent years with their advantages of energy-saving and environmental protection. Due to the shortcoming of battery charging time of electric vehicles, the emergence of quick-swapping electric vehicles has been promoted, that is, quickly swapping the battery pack on the electric vehicle, removing a depleted battery pack and installing a fully charged battery pack. Due to the requirement of endurance mileage, the battery pack of electric vehicles is very heavy, so the swapping of battery packs need to rely on proprietary equipment. Therefore, a battery swapping station as a professional service place to provide battery pack swapping for the electric vehicles came into being.

However, the current battery swapping stations are only tailored according to the different models and battery pack specifications of various car manufacturers, that is to say, a battery swapping station can only swap battery packs of the same specification and the same locking method, which greatly limits the development prospect of the battery swapping station.

### CONTENT OF THE PRESENT INVENTION

The technical problem to be solved by the present disclosure is to provide a battery swapping station and a battery swapping method thereof in order to overcome the defect that only a battery pack of one specification can be swapped in a battery swapping station in the prior art.

The present disclosure solves the above-mentioned technical problems through the following technical solutions:

The present disclosure provides a battery swapping station, which is used to swap a battery pack for an electric vehicle, and the battery swapping station includes:
at least one parking position;
a battery compartment at least storing a first battery pack for a first electric vehicle and a second battery pack for a second electric vehicle, wherein the first battery pack is mounted on the first electric vehicle by means of a first locking mechanism, and the second battery pack is mounted on the second electric vehicle by means of a second locking mechanism;
a first battery swapping device and a second battery swapping device, the first battery swapping device and the second battery swapping device being configured to move back and forth between the parking position and the battery compartment, so as to swap a battery pack of the first electric vehicle or the second electric vehicle, wherein the first battery swapping device is used for locking and unlocking the first locking mechanism, and the second battery swapping device is used for locking and unlocking the second locking mechanism.

In this technical solution, by placing the first battery pack and the second battery pack in the battery compartment, and configuring the first battery swapping device and the second battery swapping device capable of locking and unlocking the first battery pack and the second battery pack, the battery swapping station can swap at least two types of battery packs, so as to be at least compatible with the battery swapping of the first electric vehicle and the second electric vehicle.

Preferably, the battery swapping station further includes a vehicle identification device, and the vehicle identification device is configured to identify the battery pack type and locking mechanism type of an electric vehicle to be battery-swapped.

The vehicle identification device is further configured to send a first battery swapping signal to the first battery swapping device when the locking mechanism type is the first locking mechanism, and send a second battery swapping signal to the second battery swapping device when the locking mechanism type is the second locking mechanism.

The first battery swapping device and the second battery swapping device perform a battery pack swapping operation according to the first battery swapping signal and the second battery swapping signal respectively.

In this technical solution, by setting a vehicle identification device, the battery pack type and locking mechanism type of of the electric vehicle driving into the parking position may be identified, so as to control the corresponding battery swapping device to perform the subsequent battery swapping process.

Preferably, the battery swapping station further includes a lifting and lowering mechanism, the lifting and lowering mechanism is used to lift the first electric vehicle in the parking position to a first height; and the lifting and lowering mechanism is also used to lift the second electric vehicle in the parking position to a second height.

In this technical solution, the lifting and lowering mechanism may adjust the parking position to different heights according to the type of electric vehicle parked in the parking position, that is, lift the electric vehicle to different heights, so as to meet the height space requirements of the disassembly and assembly of the battery pack during the battery swapping process of different types of battery packs.

Preferably, the battery compartment is located at one side of the parking position, and the battery swapping station is provided with an avoidance area, and the avoidance area is located between the battery compartment and the parking position or at the other side of the parking position relative to the battery compartment, and the avoidance area is used to allow the first battery swapping device and the second battery swapping device to avoid each other during walking.

In this technical solution, by setting an avoidance area, mutual interference between the first battery swapping device and the second battery swapping device during walking can be avoided.

Preferably, the battery compartment is provided with a battery access port, and the avoidance area is arranged on either side or both sides of a walking path moving back and forth between the parking position and the battery access port.

In this technical solution, when the battery compartment has only one battery access port, then the first battery swapping device and the second battery swapping device have overlapping walking paths, and the avoidance area is arranged on either side or both sides of the walking path, which can realize the avoidance of the first battery swapping device or the second battery swapping device from another battery swapping device.

Preferably, the battery compartment is provided with two battery access ports, and the avoidance area of one of the two battery access ports is a walking path between the other battery access port and the parking position.

In this technical solution, when the battery compartment is provided with two battery access ports, then the first battery swapping device and the second battery swapping device may respectively design a separate non-overlapping walking path, so that the corresponding walking path between one of the battery access ports and the parking position may be used as an avoidance area between the other battery access port and the parking position.

Preferably, the battery compartment is distributed on both sides of the parking position, which are respectively a first battery compartment and a second battery compartment. The first battery compartment is used for placing the first battery pack, and the second battery compartment is used for placing the second battery pack. The first battery swapping device moves back and forth between the first battery compartment and the parking position so as to swap a battery pack of the first electric vehicle, and the second battery swapping device moves back and forth between the second battery compartment and the parking position so as to swap a battery pack of the second electric vehicle.

In this technical solution, the first battery pack is placed in the first battery compartment, the second battery pack is placed in the second battery compartment, and the first battery compartment and the second battery compartment are located on both sides of the parking position, so that the two types of battery packs have independent compartment areas, the first battery swapping device is on the same side as the first battery compartment, and the second battery swapping device is on the same side as the second battery compartment, which optimizes the structure of the battery swapping station and the design of the battery pack picking and placing process.

Preferably, the first battery compartment and the second battery compartment are provided with a battery access port respectively, and the first battery swapping device and the second battery swapping device exchange a battery pack by means of the corresponding battery access port respectively.

In this technical solution, by setting a battery access port for the first battery compartment and the second battery compartment respectively, the first battery swapping device and the second battery swapping device can exchange the battery pack through the corresponding battery access port, so that the battery swapping process of the first battery pack and the battery swapping process of the second battery pack are independent of each other, which further optimizes the design of the battery swapping station and the battery swapping process.

Preferably, the first battery swapping device is also used to lock and unlock the second locking mechanism, and the second battery swapping device is also used to lock and unlock the first locking mechanism.

In this technical solution, both the first battery swapping device and the second battery swapping device may lock and unlock the first locking mechanism and the second locking mechanism, so that the first battery swapping device and the second battery swapping device may be compatible with the swapping of the first battery pack and the second battery pack, which improves the battery swapping efficiency.

Preferably, the number of the parking positions is multiple, and the number of the first battery swapping device and the second battery swapping device is also multiple.

In this technical solution, the number of the parking position, the first battery swapping device, and the number of the second battery swapping device may be designed according to the actual battery swapping requirements.

The present disclosure provides a battery swapping method, and the battery swapping station used in the battery swapping station method is as described in the above technical solutions. The battery swapping method comprises the following steps:

obtaining the type of an electric vehicle driving into a parking position and a locking mechanism type of a battery pack;

controlling a first battery swapping device or a second battery swapping device matched with the locking mechanism type to disassemble the depleted battery pack of the electric vehicle.

In this technical solution, by means of the above battery swapping method, after obtaining the type of the electric vehicle and the locking mechanism type of the corresponding battery pack, the disassembly of the old battery pack of the electric vehicle by the matched battery swapping device may be controlled, so that the battery swapping station can be compatible with the disassembly of battery packs of different types of battery swapping vehicles.

Preferably, the battery swapping method further comprises the following steps: controlling the first battery swapping device or the second battery swapping device to install a fully charged battery pack on the electric vehicle.

In this technical solution, by means of the above battery swapping method, the battery swapping of the battery pack of the electric vehicle can be realized. The first battery swapping device and the second battery swapping device may be compatible with the disassembly and installation of the first battery pack and the second battery pack, which can further improve the battery swapping efficiency and the flexibility of the battery swapping process.

On the basis of conforming to common knowledge in the art, the above-mentioned preferred conditions can be combined arbitrarily to obtain preferred examples of the present disclosure.

The positive progress effects of the present disclosure lie in that:

The above-mentioned battery swapping station and battery swapping method, by placing various types of battery packs in the battery compartment, and configuring battery swapping device capable of locking and unlocking various types of battery packs, enables the battery swapping station to swap various types of battery packs, adapt to battery swapping of various electric vehicles. Compared with the existing battery swapping station that can only swap one type of battery pack, the battery swapping station is higher in compatibility and wider in application range.

### BRIEF DESCRIPTION OF THE DRAWINGS

FIG. 1 is a schematic diagram of the layout of a battery swapping station according to embodiment 1 of the present disclosure.
FIG. 2 is a schematic diagram of the layout of a battery swapping station according to embodiment 2 of the present disclosure.
FIG. 3 is a schematic diagram of the layout of a battery swapping station according to embodiment 3 of the present disclosure.
FIG. 4 is a schematic diagram of the layout of a battery swapping station according to embodiment 4 of the present disclosure.
FIG. 5 is a schematic diagram of the layout of a battery swapping station according to embodiment 5 of the present disclosure.
FIG. 6 is a schematic diagram of the layout of a battery swapping station according to embodiment 6 of the present disclosure.
FIG. 7 is a schematic diagram of the layout of a battery swapping station according to embodiment 7 of the present disclosure.
FIG. 8 is a schematic diagram of the layout of a battery swapping station according to embodiment 8 of the present disclosure.
FIG. 9 is a schematic diagram of the layout of a battery swapping station according to embodiment 9 of the present disclosure.
FIG. 10 is a schematic diagram of steps of a battery swapping method of a battery swapping station according to embodiment 10 of the present disclosure.
FIG. 11 is a schematic diagram of steps of a battery swapping method of a battery swapping station according to embodiment 11 of the present disclosure.
FIG. 12 is a schematic diagram of the structure of a first locking mechanism of a battery swapping device in a battery swapping station of an embodiment of the present disclosure.
FIG. 13 is a schematic diagram of the structure of a second disassembly and assembly mechanism of a battery swapping device in a battery swapping station of an embodiment of the present disclosure.

### Description of reference numerals

parking platform 1; parking position 11; first parking position 111; second parking position 112; battery compartment 2; battery access port 21; first access port 211; second access port 212; third access port 213; fourth access port 214; first battery compartment 22; second battery compartment 23; first battery swapping device 3; second battery swapping device 4; vehicle identification device 5; walking path 6; first walking path 61; second walking path 62; third walking path 63; fourth walking path 64; avoidance area 7; first avoidance area 71; second avoidance area 72; stacker 8; first locking mechanism 50; locking link 501; locking base 502; locking tongue 503; locking groove 504; unlocking position 505; second disassembly and assembly mechanism 60; rotating portion 601; rotation control mechanism 602; motor 6021; reducer 6022.

### DETAILED DESCRIPTION OF THE PREFERRED EMBODIMENT

The present disclosure is further described below by way of embodiments, but the present disclosure is not limited to the scope of the described embodiments.

### Embodiment 1

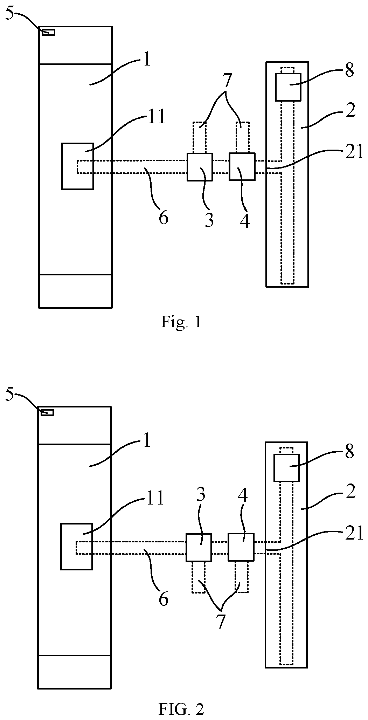

FIG. 1 shows embodiment 1 of a battery swapping station of the present disclosure. The battery swapping station is used to swap a battery pack for an electric vehicle. Herein, there are two types of electric vehicles that can be battery-swapped, and the two types of electric vehicles are a first electric vehicle and a second electric vehicle; and there are also two types of battery packs for battery swapping, and the two types of battery packs are a first battery pack and a second battery pack. Herein, the first battery pack is mounted on the first electric vehicle through a first locking mechanism, and the second battery pack is mounted on the second electric vehicle through a second locking mechanism.

As shown in FIG. 1, the battery swapping station includes a parking platform 1 and a battery compartment 2 located at one side of the parking platform 1. The parking platform 1 is provided with a parking position 11, and the battery compartment 2 stores the first battery pack and the second battery pack. The battery swapping station further includes a first battery swapping device 3 and a second battery swapping device 4.

The first battery swapping device 3 is used for moving back and forth between the parking position 11 and the battery compartment 2 so as to swap the battery pack of the first electric vehicle, and the first battery swapping device 3 is also used to lock and unlock the first locking mechanism. Specifically, the first battery swapping device 3 may take out the first battery pack from the battery compartment 2 and move it to the first electric vehicle, and lock the first locking mechanism, so as to fix the first battery pack to the first electric vehicle. At the same time, the first battery swapping device 3 may also unlock the first locking mechanism to separate the first battery pack from the first electric vehicle, and then move the first battery pack into the battery compartment 2.

The second battery swapping device 4 is used for moving back and forth between the parking position 11 and the battery compartment 2 so as to swap the battery pack of the second electric vehicle, and the second battery swapping device 4 is also used for locking and unlocking the second locking mechanism. Specifically, the second battery swapping device 4 may take out the second battery pack from the battery compartment 2 and move it to the second electric vehicle, and lock the second locking mechanism, so as to fix the second battery pack to the second electric vehicle. At the same time, the second battery swapping device 4 may also unlock the second locking mechanism to separate the second battery pack from the second electric vehicle, and then move the second battery pack into the battery compartment 2.

By setting the battery compartment 2 that stores two types of battery packs, and configuring corresponding battery swapping devices (ie, the first battery swapping device 3 and the second battery swapping device 4 ) for the two types of battery packs, the battery swapping station may swap the battery packs of two types of electric vehicles (i.e., the first electric vehicle and the second electric vehicle), and is compatible with the battery swapping functions of the two types of battery packs, which improves the compatibility of the battery swapping station.

In order to improve the battery swapping efficiency, the first battery swapping device 3 is also used to lock and unlock the second locking mechanism, that is, the first battery swapping device 3 may lock the second locking mechanismso as to install the second battery pack on the second electric vehicle, and at the same time, the first battery swapping device 3 may also unlock the second locking mechanism so as to separate the second battery pack from the second electric vehicle.

Similarly, in order to improve the battery swapping efficiency, the second battery swapping device 4 is also used to lock and unlock the first locking mechanism, that is, the second battery swapping device 4 may lock the first locking mechanism so as to install the first battery pack on the first electric vehicle, and at the same time, the second battery swapping device 4 may also unlock the first locking mechanism so as to separate the first battery pack from the first electric vehicle.

In order to make the first battery swapping device 3 compatible with the first locking mechanism and the second locking mechanism, and to achieve the purpose of being compatible with the swapping of the first battery pack and the second battery pack, the first battery swapping device 3 is provided with a first disassembly and assembly mechanism and a second disassembly and assembly mechanism. When the first battery pack needs to be swapped, then the first disassembly and assembly mechanism on the first battery swapping device 3 is used to lock and unlock the first locking mechanism; and when the second battery pack needs to be swapped, then the second disassembly and assembly mechanism on the first battery swapping device 3 is used to lock and unlock the second locking mechanism.

Similarly, in order to make the second battery swapping device 4 compatible with the first locking mechanism and the second locking mechanism, and achieve the purpose of being compatible with the swapping of the first battery pack and the second battery pack, the second battery swapping device 4 is also provided with a first disassembly and assembly mechanism and a second disassembly and assembly mechanism. When the first battery pack needs to be swapped, then the first disassembly and assembly mechanism on the second battery swapping device 4 is used to lock and unlock the first locking mechanism; and when the second battery pack needs to be swapped, then the second disassembly and assembly mechanism on the second battery swapping device 4 is used to lock and unlock the second locking mechanism.

Since the first battery swapping device 3 or the second battery swapping device 4 is provided with the first disassembly and assembly mechanism and the second disassembly and assembly mechanism, the battery swapping of the first battery pack and the second battery pack may also be completed by using only one battery swapping device (the first battery swapping device3 or the second battery swapping device 4).

The first locking mechanism and the second locking mechanism involved in this embodiment are explained by taking Chinese patent applications No.2016110412204 and 2017112736024 as examples, but the two locking mechanisms in the multifunctional battery swapping device of the present disclosure are not limited to the specific structures in the above-mentioned prior art, and may also be applied to other types of battery locking structures.

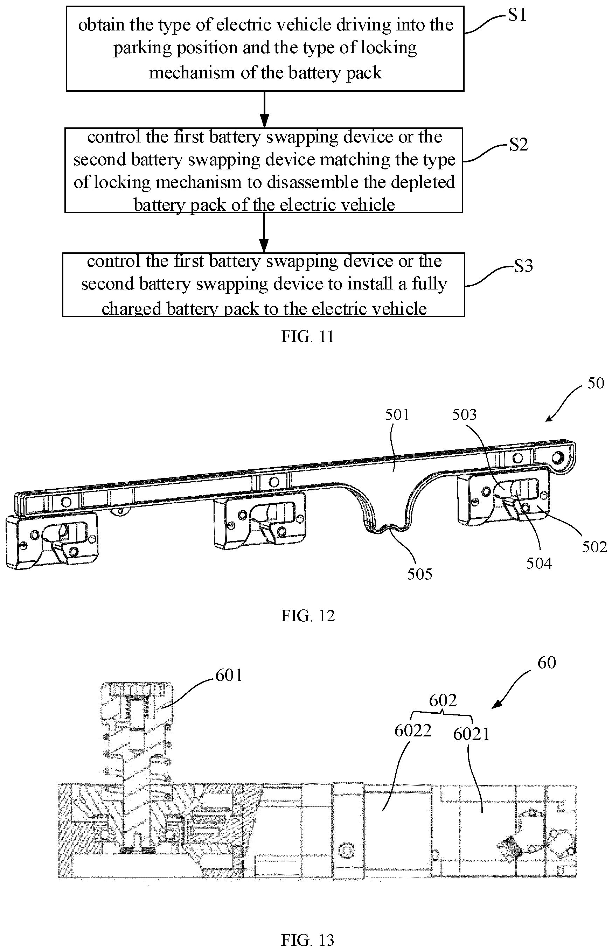

FIG. 12 shows a first locking mechanism 50 corresponding to the first disassembly and assembly mechanism. The first locking mechanism 50 includes a locking link 501, a locking base 502 and a locking tongue 503, and a locking groove 504 is formed on the locking base 502, and the locking tongue 503 is located within the locking groove 504. The locking link 501 may drive the locking tongue 503 to retract to the outside of the locking groove 504.

During the unlocking of the first battery pack, the first disassembly and assembly mechanism supports the unlocking position 505 of the locking link 501 and drives the locking link 501 to move, so that the lock tongue 503 retracts to the outside of the lock groove 504. The first disassembly and assembly mechanism drives the first battery pack to move, so that the locking shaft of the first battery pack moves out of the locking groove 504, thereby unlocking the first battery pack. During the locking of the first battery pack, when the locking link 501 does not contact the first disassembly and assembly mechanism, then the first disassembly and assembly mechanism drives the first battery pack to move, so that the lock shaft of the first battery pack enters the locking groove 504 and achieve the locking.

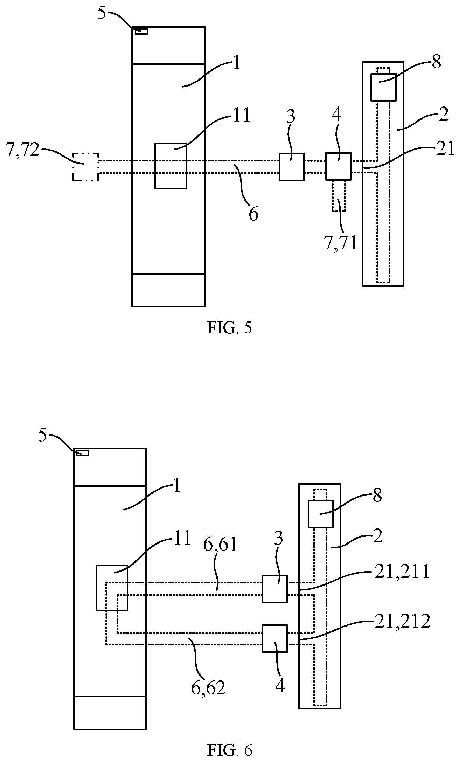

It should be noted that the specific structure of the first locking mechanism 50 shown in FIG. 12 is a typical example of the locking end of the first locking mechanism. However, it can be understood that, in addition to the structure in FIG. 5, the first disassembly and assembly mechanism 1 may also lock or unlock any other components that need to be locked or unlocked by relative movement, that is, other snap-type or staggered-tooth-type locking structure and other non-rotating locking mechanisms; it is only required that the relative movement between the movable components of the first disassembly and assembly mechanism is designed to match the locking or unlocking direction of the first locking mechanism 50.

As shown in FIG. 13, in a certain embodiment, the second disassembly and assembly mechanism 60 includes a rotating portion 601 and a rotation control mechanism 602. The second locking mechanism is provided with a locking end that cooperates with the rotating portion 601, and the rotating portion 601 is used for rotating the locking end of the second locking mechanism for disassembly and assembly. The rotation control mechanism 602 is used to control the rotation of the rotating portion 601, so that the rotating portion 601 can rotate the locking end to realize the disassembly and assembly of the second locking mechanism. The rotation control mechanism 602 includes a motor 6021 and a reducer 6022, and the output of the motor 6021 may be directly or indirectly input to the reducer 6022. For example, a connecting shaft (not shown) provided in the motor 6021 can extend into a coupling (not shown) in the reducer 6022, so as to realize the connection between the motor 6021 and the reducer 6022. The rotation speed of the motor 6021 is changed by the reducer 6022, and then the rotating portion 601 is directly or indirectly driven by the reducer 6022 to realize the tightening or loosening of the locking end of the second locking mechanism, thereby realizing the disassembly and assembly of the second battery pack. A bolt is a typical example of the locking end of the second locking mechanism. However, it can be understood that, except for bolt, the rotating portion 601 may be used for screwing any components that require a rotating operation; it is only required that the rotating portion 601 is designed to match the shape of the locking end of the second locking mechanism.

In other embodiments, there may also be multiple types of battery packs, and correspondingly, there may be multiple battery swapping devices, and each battery swapping device corresponds to the battery swapping of one type of battery pack. One battery swapping device corresponds to battery swapping of at least one battery pack. In order to improve the compatibility and battery swapping efficiency of the battery swapping device, one battery swapping device may also correspond to the battery swapping of multiple battery packs.

There may be multiple parking positions 11, and the multiple parking positions 11 may park multiple electric vehicles, so as to improve the battery swapping efficiency. Correspondingly, there may also be a plurality of first battery swapping devices 3 and second battery swapping devices 4, and each parking position 11 is provided with a first battery swapping device 3 and a second battery swapping device 4. It is certain that the first battery swapping device 3 or the second battery swapping device 4 is provided with a first disassembly and assembly mechanism and a second disassembly and assembly mechanism, and the battery swapping of the first battery pack and the second battery pack may also be completed by using only one battery swapping device (the first battery swapping device 3 or the second battery swapping device 4), that is, each parking position 11 is equipped with a battery swapping device. In the case that the space of the battery swapping station is relatively constrained or the frequency of battery swapping is low, one battery swapping device may also be used to correspond to multiple parking positions 11. The number of battery swapping devices and parking positions is set according to the actual battery swapping demand of the battery swapping station.

As shown in FIG. 1, the battery swapping station further includes a vehicle identification device 5, and the vehicle identification device 5 is used to identify the battery pack type and locking mechanism type of an electric vehicle to be battery-swapped.

The vehicle identification device 5 is also used to send a first battery swapping signal to the first battery swapping device 3 when the locking mechanism type is the first locking mechanism, that is, the electric vehicle parked in the parking position 11 is the first electric vehicle, and the battery pack to be swapped is the first battery pack. The first battery swapping device 3 performs the battery pack swapping operation according to the first battery swapping signal, that is, swaps the first battery pack of the first electric vehicle. At this time, if the second battery swapping device 4 may also be compatible with the function of swapping the first battery pack, the vehicle identification device 5 may also send the first battery swapping signal to the second battery swapping device 4, and the second battery swapping device 4 performs the battery pack swapping operation according to the first battery swapping signal, that is, swaps the first battery pack of the first electric vehicle.

The vehicle identification device 5 is also used to send a second battery swapping signal to the second battery swapping device 4 when the locking mechanism type is the second locking mechanism, that is, the electric vehicle parked at the parking position 11 is the second electric vehicle, and the battery pack to be swapped is the second battery pack. The second battery swapping device 4 performs a battery pack swapping operation according to the second battery swapping signal, that is, swaps the second battery pack of the second electric vehicle. At this time, if the first battery swapping device 3 may also be compatible with the function of swapping the second battery pack, the vehicle identification device 5 may also send the second battery swapping signal to the first battery swapping device 3, and the first battery swapping device 3 perform the battery pack swapping operation according to the second battery swapping signal, that is, swaps the second battery pack of the second electric vehicle.

By setting the vehicle identification device 5, the battery pack type and the locking mechanism type of the electric vehicle driving into the parking position 11 may be identified, so as to determine the subsequent battery swapping process. The vehicle identification device 5 may be installed at the entrance of the parking platform 1. In this way, when the electric vehicle drives into the parking platform 1, the battery pack type and the locking mechanism type of the electric vehicle may be immediately identified.

The heights of the disassembly or installation positions of the battery packs of different models of electric vehicles are different. During the battery swapping process, it is required to adjust the height of the electric vehicle according to the different models of electric vehicles (that is, the battery pack type and the locking mechanism type). Therefore, the battery swapping station also includes a vehicle-carrying platform, the parking position 11 is located on the upper surface of the vehicle-carrying platform, and the height position of the parking position 11 may be realized by the lifting and lowering movement of the vehicle-carrying platform, specifically the height of the parking position 11 may be adjusted during the lifting or lowering process by the the lifting and lowering mechanism provided at the bottom of the vehicle-carrying platform. The lifting and lowering mechanism may adjust the parking position 11 to different heights according to the type of the electric vehicle parked in the parking position 11, that is, lift the electric vehicle to different heights. For example, when the electric vehicle at the parking position 11 is the first electric vehicle, then the lifting and lowering mechanism lifts the first electric vehicle at the parking position 11 to a first height, and the first height may be adapted to the battery swapping process of the first battery pack; for another example, when the electric vehicle at the parking position 11 is the second electric vehicle, the lifting and lowering mechanism lifts the second electric vehicle at the parking position 11 to a second height, and the second height may be adapted to the battery swapping process of the second battery pack; wherein, the battery swapping process includes the battery disassembly and battery installation process.

In another embodiment, the first height may include a first sub-height, a second sub-height, a third sub-height and a fourth sub-height, respectively corresponding to four height positions corresponding to the vehicle-carrying platform during the battery disassembly or installation process, and the four height positions realize the adjustment of the height position of the parking position 11. Specifically, the first sub-height is the initial height position of the electric vehicle driving into the vehicle-carrying platform; the second sub-height is the height position at which the vehicle-carrying platform lifts the electric vehicle to enable the unloaded battery swapping device to enter and exit the bottom of the electric vehicle; the third sub-height is the height position at which the vehicle platform lowers the electric vehicle so that the battery swapping device can disassemble the battery from the bottom of the electric vehicle or install the battery to the bottom of the electric vehicle; and the fourth sub-height is the height position at which the vehicle-carrying platform lifts the electric vehicle to allow the battery-loaded battery swapping device to enter and exit the bottom of the electric vehicle. Similarly, the second height may also include four sub-heights.

In another embodiment, the first height and/or the second height may be the initial height position at which the electric vehicle drives into the vehicle platform, and the battery of the electric vehicle is disassembled or installed at the initial height position. In the process of disassembling or installing the battery, the position change of the battery swapping device and the bottom of the electric vehicle is realized by adjusting the height position of the corresponding battery swapping device.

In other embodiments, the model of the electric vehicle (i.e., battery pack type and locking mechanism type) may also be multiple. Correspondingly, the lifting and lowering mechanism may also be adjusted to a corresponding height according to the battery swapping requirements of different electric vehicles.

As shown in FIG. 1, the battery compartment 2 is provided with a battery rack for placing a battery pack. The side of the battery compartment 2 facing the parking platform 1 is provided with a battery access port 21. The battery compartment 2 is provided with a stacker 8. The stacker 8 is used to move the battery pack in the battery compartment 2 between the battery access port 21 and the battery rack, and the first battery swapping device 3 or the second battery swapping device 4 takes out or puts the battery pack from or into the battery access port 21. Specifically, when taking out an old battery pack from the electric vehicle, the first battery swapping device 3 or the second battery swapping device 4 transfers the old battery pack from the battery access port 21 to the stacker 8, and the stacker 8 places the old battery pack on the battery rack. When installing a new battery pack on the electric vehicle, the stacker 8 removes the new battery pack from the battery rack and moves it to the battery access port 21. The battery swapping device 3 or the second battery swapping device 4 takes out the new battery pack on the stacker 8 from the battery access port 21, and the first battery swapping device 3 or the second battery swapping device 4 moves to the parking position 11 and install the new battery pack on the electric vehicle.

A walking path 6 is formed between the parking position 11 and the battery access port 21 of the battery compartment 2. The walking path 6 is used for the first battery swapping device 3 and the second battery swapping device 4 to move back and forth between the parking position 11 and the battery access port 21. In order to avoid an mutual interference between the first battery swapping device 3 and the second battery swapping device 4 during walking on the walking path 6, an avoidance area 7 is also provided between the battery compartment 2 and the parking position 11, and the avoidance area 7 and the walking path 6 are not overlapping and connected. The avoidance area 7 is used to park the first battery swapping device 3 or the second battery swapping device 4.

The avoidance area 7 is used to allow the first battery swapping device 3 and the second battery swapping device 4 to avoid each other during the walking process. For example, during the movement of the first battery swapping device 3, the second battery swapping device 4 may move to the avoidance area 7, so that the first battery swapping device 3 can walk on the walking path 6 without obstacles. During the movement of the second battery swapping device 4, the first battery swapping device 3 may move to the avoidance area 7, so that the second battery swapping device 4 can walk on the walking path 6 without obstacles. In this embodiment, there are two avoidance areas 7, and the avoidance areas 7 are arranged on one side of the walking path 6.

### Embodiment 2

FIG. 2 shows embodiment 2 of the battery swapping station of the present disclosure. Most of the structure of the battery swapping station of the embodiment 2 is the same as that of the embodiment 1, with the difference that the two avoidance areas 7 are arranged on the opposite side of the walking path 6 to that of the embodiment 1.

### Embodiment 3

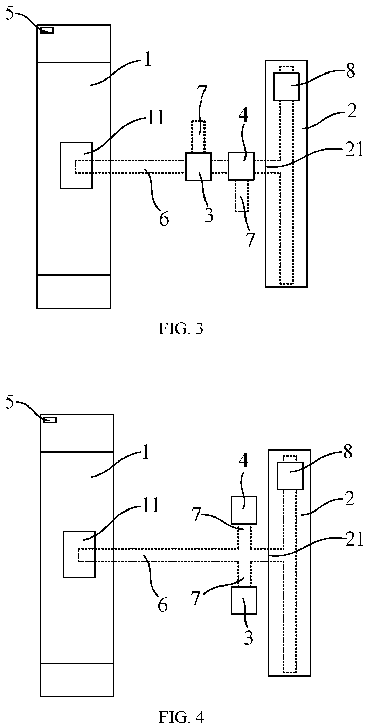

FIG. 3 shows embodiment 3 of the battery swapping station of the present disclosure. Most of the structure of the battery swapping station of the embodiment 3 is the same as that of the embodiment 1, with the differences that: the two avoidance areas 7 are respectively arranged on both sides of the walking path 6, and the two avoidance areas 7 are staggered from each other, that is, the intersections of the two avoidance areas 7 with the walking path 6 are at two locations of the walking path 6.

### Embodiment 4

FIG. 4 shows embodiment 4 of the battery swapping station of the present disclosure. Most of the structure of the battery swapping station of the embodiment 4 is the same as that of the embodiment 1, with the differences that: the two avoidance areas 7 are respectively arranged on both sides of the walking path 6, and the two avoidance areas 7 are aligned, that is, the intersections of the two avoidance areas 7 with the walking path 6 converge at one location of the walking path 6.

### Embodiment 5

FIG. 5 shows embodiment 5 of the battery swapping station of the present disclosure. Most of the structure of the battery swapping station of embodiment 5 is the same as that of embodiment 1, with the differences that: the walking path 6 passes through the parking position 11 to one side of the parking position 11 away from the battery compartment 2, that is, the first battery swapping device 3 and the second battery swapping device 4 can pass through the bottom of the electric vehicle and move to the side of the parking position 11 away from the battery compartment 2. The two avoidance areas 7 are respectively a first avoidance area 71 and a second avoidance area 72. The first avoidance area 71 is located between the battery compartment 2 and the parking position 11 and is disposed at one side of the walking path 6; and the second avoidance area 72 is located on the side of the parking position 11 away from the battery compartment 2 and is disposed at the end of the walking path 6.

The position of the avoidance area 7 described in the above-mentioned embodiments 1 to 5 may be selected according to the moving paths of the first battery swapping device 3 and the second battery swapping device 4 during the battery swapping process of the battery swapping station. The reasonable design of the avoidance area 7 can achieve the effect of simplifying the battery swapping process and saving battery swapping time.

### Embodiment 6

FIG. 6 shows embodiment 6 of the battery swapping station of the present disclosure. Most of the structure of the battery swapping station of embodiment 6 is the same as that of embodiment 1, with the differences that: the battery compartment 2 is provided with two battery access ports 21, and the two battery access ports 21 are a first access port 211 and a second battery access port 212 respectively; there are also two walking paths 6, and the two walking paths 6 are respectively a first walking path 61 and a second walking path 62. The first walking path 61 connects the parking position 11 and the first access port 211, and the second walking path 62 connects the parking position 11 and the second access port 212. The first battery swapping device 3 walks on the first walking path 61, and the second battery swapping device 4 walks on the second walking path 62. Since the first walking path 61 and the second walking path 62 do not overlap with each other, the first walking path 61 is an avoidance area relative to the second battery swapping device 4, and the second walking path 62 is an avoidance area relative to the first battery swapping device 3.

By arranging the two battery access ports 21, the movements of the first battery swapping device 3 and the second battery swapping device 4 are relatively independent, so that the first battery swapping device 3 and the second battery swapping device 4 do not need to avoid each other, and the battery swapping is improved.

### Embodiment 7

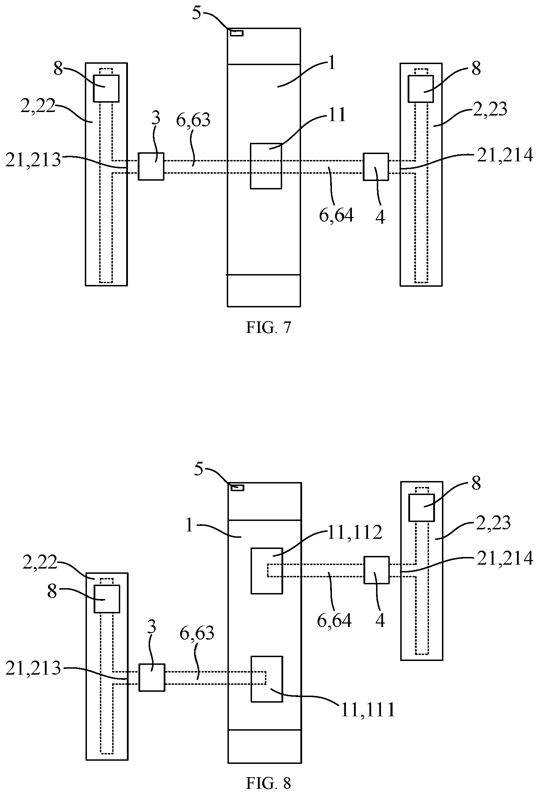

FIG. 7 shows embodiment 7 of the battery swapping station of the present disclosure. The structure of the parking platform of the battery swapping station and the structure of the battery compartment of the embodiment 7 are the same as those of the embodiment 1, with the differences that:
There are two battery compartments 2. The two battery compartments 2 are a first battery compartment 22 and a second battery compartment 23 respectively. The first battery compartment 22 and the second battery compartment 23 are distributed on both sides of the parking position 11. The battery compartment 22 is used for placing the first battery pack, and the second battery compartment 23 is used for placing the second battery pack. The first battery swapping device 3 moves back and forth between the first battery compartment 22 and the parking position 11 so as to swap the battery pack of the first electric vehicle, and the second battery swapping device 4 moves back and forth between the second battery compartment 23 and the parking position 11 so as to swap the battery pack of the second electric vehicle.

The first battery compartment 22 and the second battery compartment 23 are respectively provided with a battery access port 21, and the two battery access ports 21 are a third access port 213 and a fourth access port 214 respectively, that is, the first battery compartment 22 is provided with the third access port 213, and the second battery compartment 23 is provided with the fourth access port 214. The first battery swapping device 3 exchanges a battery pack through the third access port 213, and the second battery swapping device 4 exchanges a battery pack through the fourth access port 214.

Correspondingly, there are also two walking paths 6, and the two walking paths 6 are a third walking path 63 and a fourth walking path 64 respectively. The third walking path 63 extends from the third access port 213 to the parking position 11; the first battery swapping device 3 walks on the third walking path 63, and moves back and forth between the third access port 213 of the first battery compartment 22 and the parking position 11. The fourth walking path 64 extends from the fourth access port 214 to the parking position 11; the second battery swapping device 4 walks on the fourth walking path 64 and moves back and forth between the fourth access port 214 of the second battery compartment 23 and the parking position 11.

Since the first battery compartment 22 and the second battery compartment 23 are distributed on both sides of the parking position 11, the first battery swapping device 3 and the second battery swapping device 4 may not interfere with each other during the battery swapping process, and there is no need to set an avoidance area, which improves the battery swapping efficiency and simplifies the battery swapping process.

### Embodiment 8

FIG. 8 shows embodiment 8 of the battery swapping station of the present disclosure. Most of the structure of the battery swapping station of the embodiment 8 is the same as that of the embodiment 7, with the difference that:

The number of the parking positions 11 is two, and the two parking positions 11 are a first parking position 111 and a second parking position 112 respectively. The third walking path 63 extends from the third access port 213 to the first parking position 111; the first battery swapping device 3 walks on the third walking path 63, and moves back and forth between the third access port 213 of the first battery compartment 22 and the the first parking position 111. The fourth walking path 64 extends from the fourth access port 214 to the second parking position 112; the second battery swapping device 4 walks on the fourth walking path 64, and moves back and forth between the fourth access port 214 of the second battery compartment 23 and the second parking position 112.

When the electric vehicle driving into the parking platform 1 is the first electric vehicle, the first electric vehicle is parked at the first parking position 111, and the first battery swapping device 3 is used for battery swapping; when the electric vehicle driving into the parking platform 1 is the second electric vehicle, the second electric vehicle is parked at the second parking position 112, and the second battery swapping device 4 is used for battery swapping.

By designing the corresponding first parking position 111 and the second parking position 112 for the first electric vehicle and the second electric vehicle, the parking position may be individually designed according to the battery swapping requirements of different electric vehicles, such as the height and area of the parking position.

For example, in another embodiment, the first parking position 111 and the second parking position 112 may be arranged in parallel, that is, different from the way of being arranged in front and rear on the vehicle-carrying platform shown in FIG. 8, but arranged on left and right side by side between the first battery compartment 22 and the second battery compartment 23. Correspondingly, the first battery swapping device 3 and the second battery swapping device 4 may move back and forth between the third access port 213 of the first battery compartment 22 and the first parking position 111 and the fourth access port 214 of the second battery compartment 23 and the second parking position 112, respectively. In addition, the first battery swapping device 3 and the second battery swapping device 4 may also walk on the same walking path, and the walking path extends from the third access port 213 of the first battery compartment 22 to the first parking position 111, the second parking position 112, and the fourth access port 214 of the second battery compartment 22 in sequence. The avoidance area of the first battery swapping device 3 and/or the second battery swapping device 4 may be provided on the walking path, so as to ensure that the other battery swapping device may walk normally.

In other embodiments, the number of parking positions 11 may be more than two, so as to meet the battery swapping requirements of battery packs of various types of electric vehicles.

In other embodiments, the battery swapping device do not necessarily correspond to the parking positions one by one. One parking position may also correspond to multiple battery swapping devices, and multiple battery swapping devices may also correspond to one parking position. The number of the battery swapping devices and parking positions may be adjusted according to the actual battery swapping needs.

### Embodiment 9

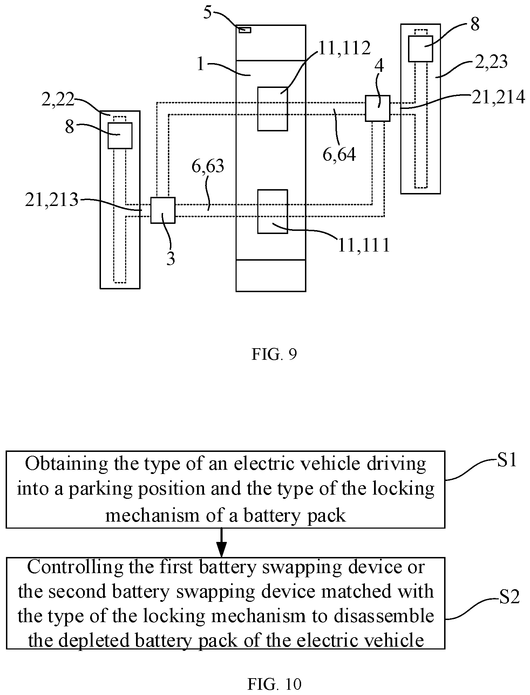

FIG. 9 shows embodiment 9 of the battery swapping station of the present disclosure. Most of the structure of the battery swapping station of the embodiment 9 is the same as that of the embodiment 8, with the differences that:

The third walking path 63 extends from the third access port 213 through the first parking position 111 to the fourth access port 214, and the fourth walking path 64 extends from and the fourth access port 214 through the second parking position 112 to the third access port 213. The third walking path 63 and the fourth walking path 64 are connected end to end to form a circular route. The first battery swapping device 3 and the second battery swapping device 4 may walk on the circular route, and both can reach the third access port 213, the first parking position 111, the fourth access port 214, and the second parking position 112, so that the first battery swapping device 3 and the second battery swapping device 4 may be compatible with the battery swapping of the first battery pack and the second battery pack, thereby improving the battery swapping efficiency.

### Embodiment 10

FIG. 10 shows embodiment 10 of the present disclosure, which provides a battery swapping method for a battery swapping station, and the battery swapping method includes the following steps:
S 1. obtaining the type of the electric vehicle driving into the parking position 11 and the locking mechanism type of the battery pack;
S2, controlling the first battery swapping device 3 or the second battery swapping device 4 matched with the locking mechanism type to disassemble the depleted battery pack of the electric vehicle.

In step S2, if the electric vehicle is the first electric vehicle, the first battery swapping device 3 is controlled to disassemble the depleted first battery pack of the first electric vehicle; and if the electric vehicle is the second electric vehicle, the second battery swapping device 4 is controlled to disassemble the depleted second battery pack of the second electric vehicle.

In the case that the first battery swapping device 3 and the second battery swapping device 4 may be compatible with the disassembly of the first battery pack and the second battery pack, if the electric vehicle is the first electric vehicle, the second battery swapping device 4 may also be controlled to disassemble the depleted first battery pack of the first electric vehicle; and if the electric vehicle is the second electric vehicle, the first battery swapping device 3 may also be controlled to disassemble the depleted second battery pack of the second electric vehicle.

With the above-mentioned battery swapping method for the battery swapping station, the old battery pack of the electric vehicle may be disassembled. The first battery swapping device 3 and the second battery swapping device 4 may be compatible with the disassembly of the first battery pack and the second battery pack, which can further improve the battery swapping efficiency and the flexibility of the battery swapping process.

### Embodiment 11

FIG. 11 shows embodiment 11 of the present disclosure, which provides a battery swapping method for a battery swapping station, and the battery swapping method includes the following steps:
S 1. obtaining the type of the electric vehicle driving into the parking position 11 and the locking mechanism type of the battery pack;
S2. controlling the first battery swapping device 3 or the second battery swapping device 4 matched with the locking mechanism type to disassemble the depleted battery pack of the electric vehicle;
S3. controlling the first battery swapping device 3 or the second battery swapping device 4 to install a fully charged battery pack on the electric vehicle.

If the electric vehicle is the first electric vehicle, in step S2, the first battery swapping device 3 is controlled to disassemble the depleted first battery pack of the first electric vehicle, and in step S3, the first battery swapping device 3 is controlled to install the fully charged first battery pack on the first electric vehicle.

If the electric vehicle is the second electric vehicle, in step S2, the second battery swapping device 4 is controlled to disassemble the depleted second battery pack of the second electric vehicle, and in step S3, the second battery swapping device 4 is controlled to install the fully charged second battery pack on the second electric vehicle.

In the case that the first battery swapping device 3 and the second battery swapping device 4 may be compatible with the disassembly and installation of the first battery pack and the second battery pack, in step S2, if the electric vehicle is the first electric vehicle, the second battery swapping device 4 may also be controlled to disassemble the depleted first battery pack of the first electric vehicle; and if the electric vehicle is the second electric vehicle, the first battery swapping device 3 may also be controlled to disassemble the depleted second battery pack of the second electric vehicle.. However, in step S3, if the electric vehicle is the first electric vehicle, the second battery swapping device 4 may also be controlled to install the fully charged first battery pack on the first electric vehicle; and if the electric vehicle is the second electric vehicle, the first battery swapping device 3 may also be controlled to disassemble the depleted second battery pack of the second electric vehicle.

The battery pack of the electric vehicle can be swapped by the above-mentioned battery swapping method for the battery swapping station. The first battery swapping device 3 and the second battery swapping device 4 may be compatible with the disassembly and installation of the first battery pack and the second battery pack, which can further improve the battery swapping efficiency and the flexibility of the battery swapping process.

Although the specific embodiments of the present disclosure are described above, those skilled in the art should understand that this is only an example, and the protection scope of the present disclosure is defined by the appended claims. Those skilled in the art can make various changes or modifications to these embodiments without departing from the principle and essence of the present disclosure, but these changes and modifications all fall within the protection scope of the present disclosure.

## Claims

1. A battery swapping station, which is used to swap a battery pack for an electric vehicle, **characterized in that**, the battery swapping station comprises:
at least one parking position;
a battery compartment at least storing a first battery pack for a first electric vehicle and a second battery pack for a second electric vehicle, wherein the first battery pack is mounted on the first electric vehicle by means of a first locking mechanism, and the second battery pack is mounted on the second electric vehicle by means of a second locking mechanism;
a first battery swapping device and a second battery swapping device, the first battery swapping device and the second battery swapping device being configured to move back and forth between the parking position and the battery compartment, so as to swap a battery pack of the first electric vehicle or the second electric vehicle, wherein the first battery swapping device is used for locking and unlocking the first locking mechanism, and the second battery swapping device is used for locking and unlocking the second locking mechanism.

2. The battery swapping station according to claim 1, **characterized in that**, the first locking mechanism is a non-rotating locking mechanism, and the second locking mechanism is a rotating locking mechanism;
the first battery swapping device is used for locking and unlocking the first locking mechanism, and the second battery swapping device is used for locking and unlocking the second locking mechanism.

3. The battery swapping station according to claim 1 or 2, **characterized in that**, the battery swapping station also comprises a vehicle identification device, and the vehicle identification device is configured to identify the battery pack type and locking mechanism type of an electric vehicle to be battery-swapped;
the vehicle identification device is further configured to send a first battery swapping signal to the first battery swapping device when the locking mechanism type is the first locking mechanism, and send a second battery swapping signal to the second battery swapping device when the locking mechanism type is the second locking mechanism;
the first battery swapping device and the second battery swapping device perform a battery pack swapping operation according to the first battery swapping signal and the second battery swapping signal respectively.

4. The battery swapping station according to at least one of claims 1 to 3, **characterized in that**, the battery swapping station further comprises a vehicle-carrying platform, the vehicle-carrying platform is used for lifting or lowering the first electric vehicle in the parking position to a first height; and the vehicle-carrying platform is also used for lifting or lowering the second electric vehicle in the parking position to a second height.

5. The battery swapping station according to at least one of claims 1 to 4, **characterized in that**, the battery compartment is located at one side of the parking position, and the battery swapping station is provided with an avoidance area, the avoidance area is located between the battery compartment and the parking position or at the other side of the parking position relative to the battery compartment, and the avoidance area is used for allowing the first battery swapping device and the second battery swapping device to avoid each other during walking.

6. The battery swapping station according to claim 5, **characterized in that**, the battery compartment is provided with a battery access port, and the avoidance area is arranged on either side of a walking path moving back and forth between the parking position and the battery access port.

7. The battery swapping station according to claim 5, **characterized in that**, the battery compartment is provided with a battery access port, and the avoidance area is arranged on both sides of a walking path moving back and forth between the parking position and the battery access port.

8. The battery swapping station according to claim 7, **characterized in that**, the number of the avoidance areas is two, the two avoidance areas are respectively arranged on both sides of the walking path, and the two avoidance areas are relatively aligned.

9. The battery swapping station according to claim 5, **characterized in that**, the battery compartment is provided with two battery access ports, and the avoidance area of one of the two battery access ports is a walking path between the other battery access port and the parking position.

10. The battery swapping station according to claim 5, **characterized in that**, the number of the avoidance areas is two, and the two avoidance areas are respectively a first avoidance area and a second avoidance area, and the first avoidance area is located between the parking position and the battery compartment, the second avoidance area is located on one side of the parking position away from the battery compartment.

11. The battery swapping station according to at least one of claims 1 to 4, **characterized in that**, the battery compartment is distributed on both sides of the parking position, which are respectively a first battery compartment and a second battery compartment, and the the first battery compartment is used for placing the first battery pack, the second battery compartment is used for placing the second battery pack, and the first battery swapping device moves back and forth between the first battery compartment and the parking position so as to swap a battery pack of the first electric vehicle, and the second battery swapping device moves back and forth between the second battery compartment and the parking position so as to swap a battery pack of the second electric vehicle.

12. The battery swapping station according to claim 11, **characterized in that**, the first battery compartment and the second battery compartment are provided with a battery access port respectively, and the first battery swapping device and the second battery swapping device exchange a battery pack by means of the corresponding battery access port respectively.

13. The battery swapping station according to claim 11, **characterized in that**, the number of the parking positions is two, the two parking positions are respectively a first parking position and a second parking position, the first parking position is used for parking the first electric vehicle, and the second parking position is used for parking the second electric vehicle.

14. The battery swapping station according to claim 13, **characterized in that**, the battery swapping station comprises an annular walking channel, and the annular walking channel is used for the first battery swapping device and the second battery swapping device to walk, and the annular walking channel passes through the first battery compartment, the first parking position, the second battery compartment and the second parking position.

15. The battery swapping station according to at least one of claims 1 to 14, **characterized in that**, the first battery swapping device is also used for locking and unlocking the second locking mechanism, and the second battery swapping device is also used for locking and unlocking the first locking mechanism.

16. The battery swapping station according to at least one of claims 1 to 14, **characterized in that**, the number of the parking positions is multiple, and/or the number of the first battery swapping device and the second battery swapping device is also multiple.

17. The battery swapping station according to at least one of claims 1 to 16, **characterized in that**, the first battery swapping device is also used for moving back and forth between the parking position and the battery compartment so as to swap the second battery pack of the second electric vehicle;
and/or, the second battery swapping device is also used for moving back and forth between the parking position and the battery compartment so as to swap the first battery pack of the first electric vehicle.

18. A battery swapping method, the battery swapping station used in the battery swapping method is as claimed in at least one of claims 1 to 17, **characterized in that**, the battery swapping method comprises the following steps:
obtaining the type of an electric vehicle driving into a parking position and a locking mechanism type of a battery pack;
controlling a first battery swapping device or a second battery swapping device matched with the locking mechanism type to disassemble the depleted battery pack of the electric vehicle.

19. The battery swapping method according to claim 18, **characterized in that**, the battery swapping method further comprises the following steps:
controlling the first battery swapping device or the second battery swapping device to install a fully charged battery pack on the electric vehicle.
